# EUROPÄISCHE PATENTANMELDUNG

(11) **EP 2 672 438 A1**
(43) Veröffentlichungstag der Anmeldung: **11.12.2013**
(21) Anmeldenummer: 12004323.7
(22) Anmeldetag: 06.06.2012
(51) Int. Cl.: G06Q 10/10

(54) **Verfahren zur Bildung eines sozialen Netzwerks**

(71) Anmelder: Appbyyou GmbH, 78582 Balgheim (DE)
(72) Erfinder: Teufel, Thomas, 78582 Balgheim (DE)
(74) Vertreter: Daub, Thomas

(57) **Zusammenfassung**

Es wird ein Verfahren zur Bildung eines sozialen Netzwerks mit einem ersten mobilen Computer (10) vorgeschlagen, der ein Display (1 2) und eine erste Kommunikationsprogrammeinheit (14) aufweist, die auf dem Display (12) einen optischen Code (16) mit zumindest einer ersten Kontaktinformation darstellt.

## Beschreibung

### Stand der Technik

Es ist bereits ein Verfahren zur Bildung eines sozialen Netzwerks zwischen zwei mobilen Computern vorgeschlagen worden.

### Vorteile der Erfindung

Es wird ein Verfahren zur Bildung eines sozialen Netzwerks mit einem ersten mobilen Computer vorgeschlagen, der ein Display und eine erste Kommunikationsprogrammeinheit aufweist, die auf dem Display einen optischen Code mit zumindest einer ersten Kontaktinformation darstellt. Unter der Wendung "zur Bildung eines sozialen Netzwerks" soll insbesondere verstanden werden, dass bei einem Betrieb zumindest die zwei Computer ein Computernetzwerk bilden, über das Nutzer der Computer eine Übertragung von Sozialdaten an einen anderen Nutzer durchführen. Vorteilhaft weist das Netzwerk mehr als zwei mobile Computer auf. Vorzugsweise kommunizieren die mobilen Computer, insbesondere die Kommunikationsprogrammeinheit der Computer, in zumindest einem Betriebszustand direkt miteinander. Das heißt insbesondere, dass die Kommunikationsprogrammeinheit Daten an eine Kontaktadresse sendet, die dem mobilen Computer zugeordnet ist und insbesondere nicht einem Server. Insbesondere werden keine Sozialdaten auf einem oder mehreren zentralen Servern gespeichert. Vorteilhaft kommunizieren die mobilen Computer in zumindest einem Betriebszustand über TCP/IP und/oder UDP. Vorzugsweise weisen die mobilen Computer zumindest ein Kommunikationsmittel auf, das dazu vorgesehen ist, über eine Funkverbindung mit einem anderen mobilen Computer, insbesondere über ein Mobilfunknetz und/oder über das Internet, zu kommunizieren. Vorzugsweise ist das Kommunikationsmittel dazu vorgesehen, über eine, einem Fachmann als sinnvoll erscheinende Verbindung, vorzugsweise jedoch über GSM, EDGE, UMTS, LTE und/oder W-LAN, zu kommunizieren. Besonders vorteilhaft kommunizieren die mobilen Computer in zumindest einem Betriebszustand mittels WAP-Push-Nachrichten. Unter "Sozialdaten" sollen insbesondere Daten verstanden werden, die ein Nutzer der ersten Kommunikationsprogrammeinheit einem oder mehreren anderen Nutzern des sozialen Netzwerks mitteilt, wie beispielsweise Textmitteilungen, Statusmeldungen, Videos, Bilder, Informationen aus Spielen und/oder andere, dem Fachmann als sinnvoll erscheinende Daten. Unter einem "mobilen Computer" soll insbesondere ein Computer verstanden werden, der dazu vorgesehen ist, bei einem Betrieb von einem Nutzer getragen zu werden. Vorzugsweise umfasst der mobile Computer einen Akku zur Stromversorgung bei einem mobilen Betrieb. Vorzugsweise ist der mobile Computer als ein, dem Fachmann als sinnvoll erscheinender mobiler Computer ausgebildet, vorteilhaft jedoch als ein Mobiltelefon, als ein Smartphone, als ein Tablet-Computer und/oder als ein Notebook. Insbesondere soll unter einem "Display" ein Mittel verstanden werden, das dazu vorgesehen ist, Informationen an einen Nutzer als ein zumindest zweidimensionales Bild optisch auszugeben. Vorzugsweise ist das Display als ein, dem Fachmann als sinnvoll erscheinendes Display, vorteilhaft jedoch als ein LCD-Display und/oder als ein OLED-Display, ausgebildet. Unter einer "Kommunikationsprogrammeinheit" soll insbesondere eine Einheit mit zumindest einem Kommunikationsprogramm verstanden werden, das dazu vorgesehen ist, Sozialdaten zu empfangen, zu senden und/oder darzustellen. Besonders bevorzugt umfasst die Kommunikationsprogrammeinheit ein Hauptkommunikationsprogramm und zumindest ein Kontaktprogramm. Insbesondere ist das Hauptkommunikationsprogramm dazu vorgesehen, mit mehreren Kontaktprogrammen auf demselben mobilen Computer zusammenzuwirken. Insbesondere soll unter einem Hauptkommunikationsprogramm" eine Applikation eines mobilen Computers verstanden werden, die in zumindest einem Betriebszustand dem Nutzer ein Eingabefeld zur Eingabe von Sozialdaten, insbesondere über ein Display des mobilen Computers, ausgibt. Vorzugsweise überträgt das Hauptkommunikationsprogramm in zumindest einem Betriebszustand Sozialdaten an mehrere insbesondere auf unterschiedlichen anderen mobilen Computer installierte Kontaktprogramme. Vorzugsweise konfiguriert der Nutzer das Hauptkommunikationsprogramm mit seinen Nutzerdaten. Bevorzugt konfiguriert nur ein Nutzer das Hauptkommunikationsprogramm mit seinen Nutzerdaten. Somit individualisiert der Nutzer das Hauptkommunikationsprogramm. Alternativ könnte das Hauptkommunikationsprogramm eine Nutzerverwaltung aufweisen, die eine Individualisierung des Hauptkommunikationsprogramms durch mehrere Nutzer ermöglicht. Unter einem "Kontaktprogramm" soll insbesondere ein Programm verstanden werden, das durch eine Zuordnung zu einem Hauptkommunikationsprogramm ein Netzwerk zu dem Nutzer des Hauptkommunikationsprogramms herstellt. Vorzugsweise empfängt ein erstes Kontaktprogramm in zumindest einem Betriebszustand zumindest Sozialdaten von dem ersten Hauptkommunikationsprogramm, das insbesondere auf einem anderen Computer installiert ist. Vorzugsweise empfängt das erste Kontaktprogramm nur von dem ersten Hauptkommunikationsprogramm Sozialdaten. Alternativ könnte das erste Kontaktprogramm mit dem auf demselben mobilen Computer installierten zweiten Hauptkommunikationsprogramm einen Empfang von Sozialdaten von dem ersten Hauptkommunikationsprogramm ermöglichen, beispielsweise indem es eine Kontaktadresse und/oder einen Schlüssel zur Entschlüsselung und insbesondere zur Verschlüsselung bereitstellt. Insbesondere werden das erste Hauptkommunikationsprogramm und das dem Hauptkommunikationsprogramm zugeordnete erste Kontaktprogramm auf unterschiedlichen mobilen Computern ausgeführt. Vorzugsweise ist das Kontaktprogramm dazu vorgesehen, zumindest Sozialdaten vorteilhaft verschlüsselt zu speichern, die ein dem Kontaktprogramm zugeordnetes Hauptkommunikationsprogramm dem Kontaktprogramm gesendet hat. Unter einem "optischen Code" soll insbesondere ein Code verstanden werden, der mittels eines insbesondere sichtbaren Lichts ausgelesen wird. Vorzugsweise erstellt die Systemrecheneinheit einen, dem Fachmann als sinnvoll erscheinenden optischen Code, vorteilhaft jedoch einen Strichcode und/oder besonders vorteilhaft einen zweidimensionalen optischen Code. Vorteilhaft weist der optische Code zumindest eine Information auf, die ihn als Code des erfindungsgemäßen Verfahrens kennzeichnet. Insbesondere soll unter einer "Kontaktinformation" eine Information verstanden werden, mittels deren eine Nachricht an den mobilen Computer über das Netzwerk versendbar ist. Die Kontaktinformation ist als eine, dem Fachmann als sinnvoll erscheinende, von einer Art des Netzwerks abhängige Information ausgebildet, vorteilhaft als eine IP-Adresse, als ein Alias einer IP-Adresse und/oder besonders vorteilhaft als eine Mobilfunknummer. Durch das erfindungsgemäße Verfahren kann das Netzwerk komfortabel und besonders sicher gebildet werden. Insbesondere kann auf eine Übertragung der Kontaktinformation über eine drahtgebundene Verbindung und/oder über ein Funknetzwerk verzichtet werden.

In einer weiteren Ausgestaltung wird vorgeschlagen, dass die erste Kommunikationsprogrammeinheit zumindest einen Initialschlüssel erstellt, wodurch eine besonders sichere Bildung des Netzwerks möglich ist. Insbesondere soll unter einem "Initialschlüssel" ein Schlüssel verstanden werden, der zumindest bei der Bildung des Netzwerks zur Verschlüsselung der Kommunikation verwendet wird. Vorzugsweise werden insbesondere asymmetrische Kommunikationsschlüssel mit dem Initialschlüssel verschlüsselt ausgetauscht, die sicherer als die Initialschlüssel sind. Vorzugsweise erstellt die Kommunikationsprogrammeinheit ein Initialschlüsselpaar mit einem ersten Initialschlüssel und einem zweiten Initialschlüssel. Unter einem "Initialschlüsselpaar" sollen insbesondere zwei zueinandergehörende asymmetrische Schlüssel einer Verschlüsselungsfunktion verstanden werden.

Des Weiteren wird vorgeschlagen, dass die erste Kommunikationsprogrammeinheit den Initialschlüssel in den optischen Code codiert, wodurch auf eine Übertragung des Initialschlüssels über eine drahtgebundene Verbindung und/oder über ein Funknetzwerk verzichtet werden kann. Unter der Wendung "in den optischen Code codieren" soll insbesondere verstanden werden, dass die Kommunikationsprogrammeinheit einen optischen Code berechnet, der die Informationen des Initialschlüssels aufweist. Insbesondere kann aus dem optischen Code der Initialschlüssel gewonnen werden.

Ferner wird ein zweiter mobiler Computer vorgeschlagen, der ein optisches Aufnahmemittel und eine zweite Kommunikationsprogrammeinheit aufweist, die den mittels des Aufnahmemittels erfassten optischen Code dekodiert, wodurch das Netzwerk besonders komfortabel und sicher gebildet werden kann. Insbesondere soll unter einem "optischen Aufnahmemittel" ein, dem Fachmann als sinnvoll erscheinendes Mittel verstanden werden, vorzugsweise jedoch eine Foto - und/oder Videokamera des mobilen Computers. Unter der Wendung "mittels des Aufnahmemittels erfassen" soll insbesondere verstanden werden, dass das Aufnahmemittel ein Bild des optischen Codes insbesondere von der Kommunikationsprogrammeinheit getriggert aufnimmt und das Bild der Kommunikationsprogrammeinheit zur Verfügung stellt. Insbesondere soll unter dem Begriff "dekodieren" verstanden werden, dass die Kommunikationsprogrammeinheit aus dem Bild des Aufnahmemittels von dem optischen Code zumindest die erste Kontaktinformation und vorteilhaft den Initialschlüssel bestimmt.

Zudem wird vorgeschlagen, dass die zweite Kommunikationsprogrammeinheit der ersten Kommunikationsprogrammeinheit zumindest Kontaktprogramminformationen der zweiten Kommunikationsprogrammeinheit sendet, wodurch eine geringe mittels des optischen Codes zu übertragende Datenmenge erreicht werden kann. Unter einer "Kontaktprogramminformation" soll insbesondere eine Information verstanden werden, die zur Generierung, Konfiguration und/oder zur Ausführung eines Kontaktprogramms notwendig ist. Vorzugsweise weist die Kontaktprogramminformation zumindest einen Kommunikationsschlüssel zur Kommunikation mit einem Hauptkommunikationsprogramm auf. Insbesondere soll unter dem Begriff "senden" verstanden werden, dass die zweite Kommunikationsprogrammeinheit zumindest die Kontaktprogramminformationen über eine Verbindung an die erste Kommunikationsprogrammeinheit überträgt.

Weiterhin wird vorgeschlagen, dass die zweite Kommunikationsprogrammeinheit die gesendeten Kontaktprogramminformationen der zweiten Kommunikationsprogrammeinheit vor dem Senden mit dem Initialschlüssel verschlüsselt, wodurch eine vorteilhafte Sicherheit erreicht werden kann. Somit sendet die zweite Kommunikationsprogrammeinheit die mit dem ersten Initialschlüssel verschlüsselten Kontaktprogramminformationen an die erste Kommunikationsprogrammeinheit.

In einer vorteilhaften Ausbildung der Erfindung wird vorgeschlagen, dass die erste Kommunikationsprogrammeinheit mittels der Kontaktprogramminformationen der zweiten Kommunikationsprogrammeinheit ein zweites Kontaktprogramm generiert, wodurch eine vorteilhafte Kapselung von Sozialdaten konstruktiv einfach möglich ist. Alternativ oder zusätzlich könnte die Kommunikationsprogrammeinheit dazu vorgesehen sein, ein Kontaktprogramm mit den Kontaktprogramminformationen zu konfigurieren und/oder ein Kontaktprogramm mit den Kontaktprogramminformationen auszuführen. Insbesondere soll unter der Wendung "ein Kontaktprogramm generieren" verstanden werden, dass die Kommunikationsprogrammeinheit aus einem Quellcode und den Kontaktprogramminformationen ein auf dem mobilen Computer ausführbares Kontaktprogramm erstellt.

In einer weiteren Ausgestaltung wird vorgeschlagen, dass die erste Kommunikationsprogrammeinheit der zweiten Kommunikationsprogrammeinheit zumindest Kontaktprogramminformationen der ersten Kommunikationsprogrammeinheit sendet, wodurch eine bidirektionale Kommunikation möglich ist.

Des Weiteren wird vorgeschlagen, dass die erste Kommunikationsprogrammeinheit die Kontaktprogramminformationen der ersten Kommunikationsprogrammeinheit vor dem Senden verschlüsselt, wodurch eine vorteilhafte Sicherheit erreicht werden kann.

Ferner wird vorgeschlagen, dass die zweite Kommunikationsprogrammeinheit mittels der Kontaktprogramminformationen der ersten Kommunikationsprogrammeinheit ein erstes Kontaktprogramm generiert, wodurch eine vorteilhafte Kapselung von Sozialdaten bei einer bidirektionalen Kommunikation konstruktiv einfach möglich ist.

Zudem wird vorgeschlagen, dass die erste Kommunikationsprogrammeinheit Sozialdaten an das erste Kontaktprogramm sendet, wodurch die Sozialdaten vor unberechtigten Zugriffen geschützt übertragen, gespeichert und insbesondere dargestellt werden können.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines erfindungsgemäßen Systems mit einem ersten mobilen Computer und einem zweiten mobilen Computer und
- Fig. 2: ein Verfahren zur Bildung eines Netzwerks mit dem System aus Figur 1.

### Beschreibung des Ausführungsbeispiels

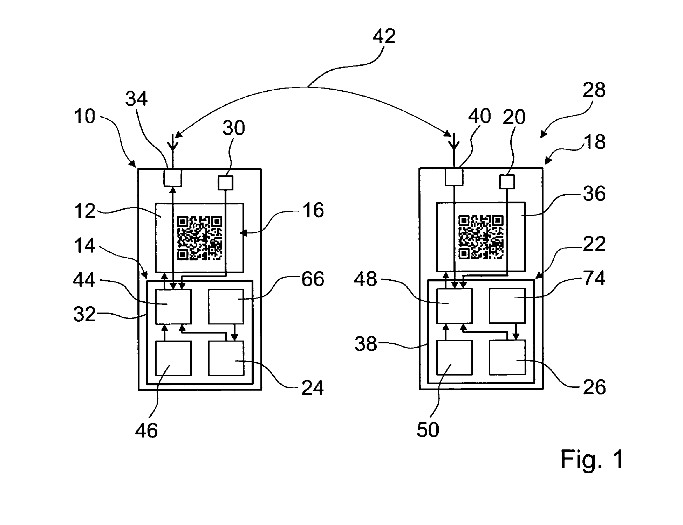

Figur 1 zeigt ein System 28 mit einem ersten mobilen Computer 10 und einem zweiten mobilen Computer 1 8. Der erste und der zweite Computer 10, 18 sind als Smartphones ausgebildet. Der erste mobile Computer 10 weist zumindest eine erste Kommunikationsprogrammeinheit 14, ein Display 12, ein Aufnahmemittel 30, eine Recheneinheit 32 und ein Kommunikationsmittel 34 auf. Der zweite mobile Computer 1 8 umfasst eine zweite Kommunikationsprogrammeinheit 22, ein Aufnahmemittel 20, ein Display 36, eine Recheneinheit 38 und ein Kommunikationsmittel 40. Die Recheneinheiten 32, 38 der mobilen Computer 10, 1 8 führen bei einem Betrieb die erste Kommunikationsprogrammeinheit 14 bzw. die zweite Kommunikationsprogrammeinheit 22 aus. Die Kommunikationsmittel 34, 40 sind dazu vorgesehen, über eine Funkverbindung 42 Daten auszutauschen, die hier zumindest teilweise aus einem Mobilfunknetz bestehen. Nicht näher dargestellt ist ein dritter Computer des Systems 28 mit einer dritten Kommunikationsprogrammeinheit. Der dritte Computer könnte beispielsweise als ein Desktopcomputer ausgebildet sein.

Die erste Kommunikationsprogrammeinheit 14 des ersten mobilen Computers 10 umfasst nach einer Bildung eines Netzwerks ein erstes Hauptkommunikationsprogramm 44 und eine beliebige Anzahl von Kontaktprogrammen 24, 46, die anderen Hauptkommunikationsprogrammen 48 zugeordnet sind. Diese anderen Hauptkommunikationsprogramme 46 werden von Recheneinheiten 38 anderer Computer 18 ausgeführt. Eines der Kontaktprogramme 24, hier als zweites Kontaktprogramm 24 bezeichnet, ist einem zweiten Hauptkommunikationsprogramm 48 zugeordnet. Ein anderes der dargestellten Kontaktprogramme 46 ist der dritten Kommunikationsprogrammeinheit zugeordnet.

Die zweite Kommunikationsprogrammeinheit 22 des zweiten mobilen Computers 18 umfasst nach einer Bildung eines Netzwerks das zweite Hauptkommunikationsprogramm 48 und eine ebenfalls beliebige Anzahl von Kontaktprogrammen 26, 50, die anderen Hauptkommunikationsprogrammen 44 zugeordnet sind. Diese anderen Hauptkommunikationsprogramme 44 werden von Recheneinheiten 32 anderer Computer 10 ausgeführt. Eines der Kontaktprogramme 26, hier als erstes Kontaktprogramm 26 bezeichnet, ist dem ersten Hauptkommunikationsprogramm 44 zugeordnet. Ein anderes der dargestellten Kontaktprogramme 50 ist der dritten Kommunikationsprogrammeinheit zugeordnet.

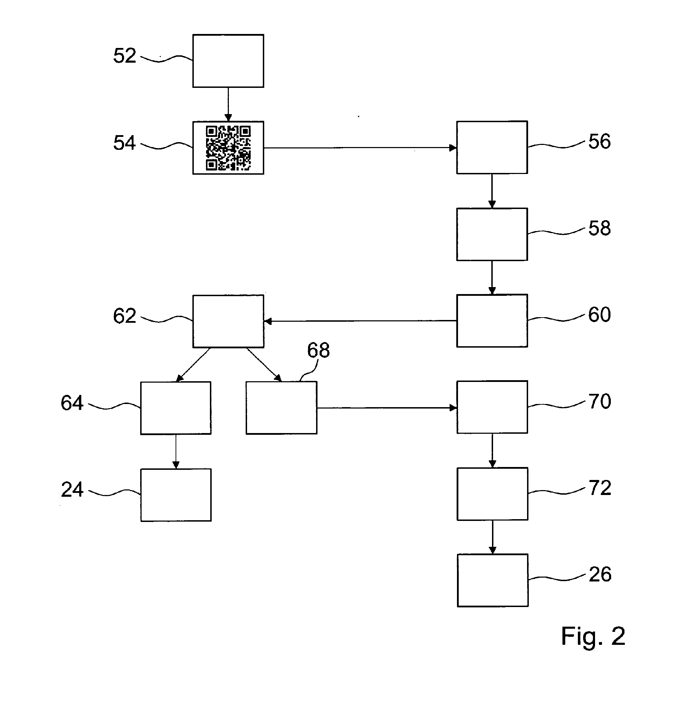

Figur 2 zeigt das Verfahren zur Bildung eines Netzwerks mit dem ersten und dem zweiten mobilen Computer 10, 18. Entsprechend diesem Verfahren können weitere mobile Computer zu dem Netzwerk hinzugefügt werden. Desktopcomputer können über ein anderes, dem Fachmann als sinnvoll erscheinendes Verfahren hinzugefügt werden. Das erste Hauptkommunikationsprogramm 44 der ersten Kommunikationsprogrammeinheit 14 generiert von einer Nutzereingabe abhängig in einem ersten Verfahrensschritt 52 einen optischen Code 16. Der optischen Code 16 ist als QR-Code ausgebildet. Der optische Code 16 weist einen von dem Hauptkommunikationsprogramm 44 erstellten Initialschlüssel auf. Zudem umfasst der optische Code 16 eine Kontaktinformation. Über die Kontaktinformation ist der erste mobile Computer 10 in dem Mobilfunknetz adressierbar. Des Weiteren weist der optische Code 16 weitere, dem Fachmann als sinnvolle erscheinende Informationen, beispielsweise Sozialdaten wie einen Nutzernamen, auf. In einem nächsten Verfahrensschritt 54 stellt das erste Hauptkommunikationsprogramm 44 den optischen Code 16 mittels des Displays 12 des ersten mobilen Computers 10 dar.

In einem weiteren Verfahrensschritt 56 erfasst das zweite Hauptkommunikationsprogramm 48 des zweiten mobilen Computers 18 den auf dem Display 12 des ersten mobilen Computers 10 dargestellten optischen Code 16 mittels des Aufnahmemittels 20 des zweiten mobilen Computers 18. Das zweite Hauptkommunikationsprogramm 48 ist dazu vorgesehen, die Erfassung des optischen Codes 16 von einer Nutzereingabe abhängig zu starten. In einem nächsten Verfahrensschritt 58 decodiert das zweite Hauptkommunikationsprogramm 48 den optischen Code 16. Somit stehen dem zweiten Hauptkommunikationsprogramm 48 die Kontaktinformation des ersten mobilen Computers 10 und der Initialschlüssel zur Verfügung.

In einem weiteren Verfahrensschritt 60 sendet das zweite Hauptkommunikationsprogramm 48 dem ersten Hauptkommunikationsprogramm 44 mittels der Kontaktinformation des ersten mobilen Computers 10 Kontaktprogramminformationen der zweiten Kommunikationsprogrammeinheit 22. Die Kontaktprogramminformationen umfassen eine Kontaktinformation des zweiten mobilen Computers 18, einen Kommunikationsschlüssel und weitere, dem Fachmann als sinnvoll erscheinende Informationen, beispielsweise Sozialdaten. Vor dem Senden verschlüsselt das zweite Hauptkommunikationsprogramm 48 die Kontaktprogramminformationen mit dem Initialschlüssel.

In einem Verfahrensschritt 62 empfängt die erste Kommunikationsprogrammeinheit 14 die Kontaktprogramminformationen von dem zweiten Hauptkommunikationsprogramm 48. Die erste Kommunikationsprogrammeinheit 14 entschlüsselt die Daten mittels des Initialschlüssels. In einem nächsten Verfahrensschritt 64 generiert die erste Kommunikationsprogrammeinheit 14 mittels der Kontaktprogramminformationen der zweiten Kommunikationsprogrammeinheit 22 das zweite Kontaktprogramm 24. Dazu weist die erste Kommunikationsprogrammeinheit 14 einen Compiler 66 auf. Ferner sendet das erste Hauptkommunikationsprogramm 44 in einem Verfahrensschritt 68 mittels der Kontaktinformation des zweiten mobilen Computers 10 Kontaktprogramminformationen der ersten Kommunikationsprogrammeinheit 14. Das erste Hauptkommunikationsprogramm 44 verschlüsselt die Kontaktprogramminformationen vor dem Senden mittels des Initialschlüssels oder alternativ mit einem anderen, von dem zweiten Hauptkommunikationsprogramm 48 empfangenen Schlüssel.

In einem Verfahrensschritt 70 empfängt die zweite Kommunikationsprogrammeinheit 22 die Kontaktprogramminformationen von dem ersten Hauptkommunikationsprogramm 48. Die zweite Kommunikationsprogrammeinheit 22 entschlüsselt die Daten. In einem nächsten Verfahrensschritt 72 generiert die zweite Kommunikationsprogrammeinheit 22 mittels der Kontaktprogramminformationen der ersten Kommunikationsprogrammeinheit 14 das erste Kontaktprogramm 26. Dazu weist die zweite Kommunikationsprogrammeinheit 22 einen Compiler 74 auf.

Das erste Hauptkommunikationsprogramm 44 sendet verschlüsselte Sozialdaten an das erste Kontaktprogramm 26. Das erste Kontaktprogramm 26 stellt die Sozialdaten dem zweiten Hauptkommunikationsprogramm 48 zur Darstellung auf dem Display des zweiten mobilen Computers 18 bereit. Alternativ oder zusätzlich könnte das erste Kontaktprogramm 26 die Sozialdaten insbesondere teilweise direkt anzeigen. Zur Auflösung des Netzwerks sendet das erste Hauptkommunikationsprogramm 44 einen Löschbefehl an das erste Kontaktprogramm 26. Das erste Kontaktprogramm 26 löscht daraufhin einen Schlüssel und/oder die verschlüsselten Sozialdaten, die das erste Kontaktprogramm 26 speichert. Eine Übertragung von Sozialdaten von dem zweiten Hauptkommunikationsprogramm 48 zu dem zweiten Kontaktprogramm 24 erfolgt entsprechend der Übertragung von Sozialdaten von dem ersten Hauptkommunikationsprogramm 44 zu dem ersten Kontaktprogramm 26.

### Bezugszeichen

- 10: erster mobiler Computer
- 12: Display
- 14: erste Kommunikationsprogrammeinheit
- 16: optischer Code
- 18: zweiter mobiler Computer
- 20: Aufnahmemittel
- 22: zweite Kommunikationsprogrammeinheit
- 24: zweites Kontaktprogramm
- 26: erstes Kontaktprogramm
- 28: System
- 30: Aufnahmemittel
- 32: Recheneinheit
- 34: Kommunikationsmittel
- 36: Display
- 38: Recheneinheit
- 40: Kommunikationsmittel
- 42: Funkverbindung

- 44: erstes Hauptkommunikationsprogramm
- 46: drittes Kontaktprogramm
- 48: zweites Hauptkommunikationsprogramm
- 50: drittes Kontaktprogramm
- 52: Verfahrensschritt
- 54: Verfahrensschritt
- 56: Verfahrensschritt
- 58: Verfahrensschritt
- 60: Verfahrensschritt
- 62: Verfahrensschritt
- 64: Verfahrensschritt
- 66: Compiler
- 68: Verfahrensschritt
- 70: Verfahrensschritt
- 72: Verfahrensschritt
- 74: Compiler

## Patentansprüche

1. Verfahren zur Bildung eines sozialen Netzwerks mit einem ersten mobilen Computer (10), der ein Display (12) und eine erste Kommunikationsprogrammeinheit (14) aufweist, die auf dem Display (1 2) einen optischen Code (16) mit zumindest einer ersten Kontaktinformation darstellt.

2. Verfahren nach Anspruch 1, **dadurch gekennzeichnet, dass** die erste Kommunikationsprogrammeinheit (14) zumindest einen Initialschlüssel erstellt.

3. Verfahren nach Anspruch 2, **dadurch gekennzeichnet, dass** die erste Kommunikationsprogrammeinheit (14) den Initialschlüssel in den optischen Code (16) codiert.

4. Verfahren nach einem der vorhergehenden Ansprüche, **gekennzeichnet durch** einen zweiten mobilen Computer (1 8), der ein optisches Aufnahmemittel (20) und eine zweite Kommunikationsprogrammeinheit (22) aufweist, die den mittels des Aufnahmemittels (20) erfassten optischen Code (16) dekodiert.

5. Verfahren nach Anspruch 4, **dadurch gekennzeichnet, dass** die zweite Kommunikationsprogrammeinheit (22) der ersten Kommunikationsprogrammeinheit (14) zumindest Kontaktprogramminformationen der zweiten Kommunikationsprogrammeinheit (22) sendet.

6. Verfahren nach Anspruch 5, **dadurch gekennzeichnet, dass** die zweite Kommunikationsprogrammeinheit (22) die gesendeten Kontaktprogramminformationen der zweiten Kommunikationsprogrammeinheit (22) vor dem Senden mit dem Initialschlüssel verschlüsselt.

7. Verfahren zumindest nach Anspruch 5, **dadurch gekennzeichnet, dass** die erste Kommunikationsprogrammeinheit (14) mittels der Kontaktprogramminformationen der zweiten Kommunikationsprogrammeinheit (22) ein zweites Kontaktprogramm (24) generiert.

8. Verfahren zumindest nach Anspruch 4, **dadurch gekennzeichnet, dass** die erste Kommunikationsprogrammeinheit (14) der zweiten Kommunikationsprogrammeinheit (22) zumindest Kontaktprogramminformationen der ersten Kommunikationsprogrammeinheit (14) sendet.

9. Verfahren nach Anspruch 8, **dadurch gekennzeichnet, dass** die erste Kommunikationsprogrammeinheit (14) die Kontaktprogramminformationen der ersten Kommunikationsprogrammeinheit (14) vor dem Senden verschlüsselt.

10. Verfahren zumindest nach Anspruch 8, **dadurch gekennzeichnet, dass** die zweite Kommunikationsprogrammeinheit (22) mittels der Kontaktprogramminformationen der ersten Kommunikationsprogrammeinheit (1 4) ein erstes Kontaktprogramm (26) generiert.

11. Verfahren nach Anspruch 10, **dadurch gekennzeichnet, dass** die erste Kommunikationsprogrammeinheit (14) Sozialdaten an das erste Kontaktprogramm (26) sendet.

12. Erste Kommunikationsprogrammeinheit nach einem der vorhergehenden Ansprüche.

13. Mobiler Computer mit einer ersten Kommunikationsprogrammeinheit (14) nach Anspruch 12.

14. Zweite Kommunikationsprogrammeinheit zumindest nach Anspruch 4.

15. Mobiler Computer mit einer zweiten Kommunikationsprogrammeinheit (22) nach Anspruch 14.

16. System mit einem ersten mobilen Computer (10) zumindest nach Anspruch 13 und einem zweiten mobilen Computer (18) zumindest nach Anspruch 15.
